# EUROPÄISCHE PATENTSCHRIFT

(11) **EP 1 969 259 B1**
(45) Veröffentlichungstag und Bekanntmachung des Hinweises auf die Patenterteilung: **23.09.2009**
(21) Anmeldenummer: 06830402.1
(22) Anmeldetag: 06.12.2006
(51) Int. Cl.: F16H 63/32

(54) **SCHALTANORDNUNG MIT EINER SCHALTGABEL**
SHIFT ARRANGEMENT HAVING A SHIFT FORK
ARRANGEMENT DE CHANGEMENT DE RAPPORT COMPORTANT UNE FOURCHETTE DE BOÎTE DE VITESSES

(30) Priorität: 24.12.2005 DE 102005062248
(43) Veröffentlichungstag der Anmeldung: 17.09.2008
(73) Patentinhaber: Schaeffler KG, 91074 Herzogenaurach (DE)
(72) Erfinder: MASSINI, Stanislav, 90579 Langenzenn (DE)
(86) Internationale Anmeldenummer: PCT/EP2006/069356
(87) Internationale Veröffentlichungsnummer: WO 2007/074030

(56) Entgegenhaltungen:
- EP-A- 1 602 862
- DE-A1- 10 125 098
- DE-A1- 10 309 407
- DE-B- 1 122 385
- DE-U- 7 105 111

## Beschreibung

### Gebiet der Erfindung

Die Erfindung betrifft eine Schaltanordnung mit einem Schaltglied eines Zahnräderwechselgetriebes und einer in eine Schaltmuffe eingreifenden Schaltgabel, die zumindest aus einer auf dem Schaltglied angeordneten Führung mit einer Führungsausnehmung, deren Ausformung komplementär zum Schaltglied ist, und einem Schaltgabelgrundkörper besteht, wobei der Schaltgabelgrundkörper gegenüberliegende Gabelenden aufweist, welche die Schaltmuffe umgreifen.

### Hintergrund der Erfindung

In manuellen oder automatisierten Getrieben sind zwischen zwei Gangrädern, die drehbar auf einer Getriebewelle gelagert sind, ein Synchronkörper und eine Schaltmuffe angeordnet. Die Schaltmuffe ist mit einer Innenverzahnung versehen, die in eine in den Synchronkörper eingebrachte Außenverzahnung eingreift. Der Synchronkörper ist drehfest mit der Getriebewelle verbunden. Beim Schalten eines Gangs wird die Schaltmuffe in axialer Richtung auf eines der Gangräder verschoben, bis die Innenverzahnung in eine am Gangrad angebrachte Kupplungsverzahnung eingreift. Die Innenverzahnung der Schaltmuffe steht dann sowohl mit der Kupplungsverzahnung als auch mit der Außenverzahnung des Synchronkörpers in Eingriff. Die Schaltgabel hat die Aufgabe, eine axiale Bewegung von einem Schaltgestänge auf die Schaltmuffe zu übertragen. Dabei ist die Schaltgabel axial verschiebbar auf einem Schaltglied, das als eine Schaltschiene oder Schaltstange ausgebildet sein kann, gelagert und greift mit Mitnehmern in eine Führungsnut der Schaltmuffe ein.

Zunehmend gewinnen aus Blech hergestellte Schaltgabeln an Bedeutung, da diese sich kostengünstig und materialsparend herstellen lassen. Der Schaltgabelgrundkörper ist zumeist ein durch Kaltumformen von Blech hergestelltes Formteil. Das Formteil ist gabelförmig mit zwei zueinander beabstandeten Gabelenden ausgeführt. Die Schaltgabeln der betrachteten Gattung weisen eine Führung mit einem in der Regel zylindrisch ausgebildeten Führungsloch auf, welche auf einem Schaltglied sitzt und somit eine Schaltanordnung bilden. Es gibt Schaltgabeln, die längs- und zum Teil auch schwenkbeweglich auf den vorgenannten Schaltgliedern angeordnet sind. Weiterhin gibt es Schaltgabeln, die fest auf diesen Schaltgliedern sitzen und deshalb mit dem Schaltglied zusammen relativ zu und in einem Schaltgetriebe beweglich sind.

Führungen mit einem Festsitz auf einem der Schaltglieder sind mit einem vollständig durch die Führung hindurch verlaufenden Ausnehmung in Form einer Durchgangsausnehmung versehen. Die Durchgangsausnehmung verläuft alternativ dazu nur teilweise und damit in der Form eines Sacklochs. Die Verbindung zwischen dem Schaltgabelgrundkörper aus Blech und der Führung ist beispielsweise in der DE 103 09 407 A1 über einen Nocken hergestellt.

Eine Alternative zu einer gattungsgemäßen Schaltgabel ist in DE 101 25 098 A1 beschrieben. Dort ist zunächst eine Schaltgabel vorgesehen, bei der die Führung und eine Basis zusammen als eine Einheit einteilig und separat zum Schaltgabelgrundkörper ausgebildet sind und dann im weiteren eine Schaltgabel, bei der die Führung, die Basis und der Schaltgabelgrundkörper jeweils als Einzelteile hergestellt und anschließend miteinander verbunden sind. Die Komponenten der Schaltgabeln sind aus Blech gefertigt.

Eine gattungsgemäße Schaltanordnung ist in DE 71 05 111 U beschrieben.

Die Konstruktionen der Schaltgabeln insbesondere in der Massenherstellung nach dem zuvor beschriebenen Stand der Technik erweisen sich beim Verbinden mit der Führung als nicht ausreichend verzugsstabil. Die Anzahl der Einzelteile und/oder der Aufwand für die Herstellung derartiger Schaltgabeln ist relativ hoch. Die Schaltgabeln müssen aufgrund von Positionierungstoleranzen zwischen den Einzelteilen vor dem Fügen und aufgrund des Wärmeverzuges der dünnwandigen Blechbauteile nach dem Fügen aufwändig gerichtet und auf ihre Funktionsmaße justiert werden. Besonders Dünnblechgabeln verziehen sich beim Verschweißen, so dass in aufwändiger Weise der Verzug durch zusätzliche Bauteile wie entsprechend zusortierte Gleitschuhe korrigiert werden muss.

Je massiver die Bauteile sind, desto geringer ist der Verzug, allerdings ergibt sich daraus eine unerwünschte Erhöhung der Masse.

### Aufgabe der Erfindung

Der Erfindung liegt deshalb die Aufgabe zugrunde, eine Schaltanordnung zu schaffen, bei der die vorstehend genannten Nachteile beseitigt sind.

### Zusammenfassung der Erfindung

Erfindungsgemäß wird diese Aufgabe nach den Merkmalen des Anspruchs 1 dadurch gelöst, dass die Führung zumindest drei Ausnehmungen aufweist, von denen die erste und zweite Ausnehmung als Durchgangsausnehmungen das Schaltglied aufnehmen, und wobei die dritte Ausnehmung den Schaltgabelgrundkörper aufnimmt. Die dritte Ausnehmung der erfindungsgemäßen Führung ist so dimensioniert, dass vor der dauerhaften Verbindung der Führung mit dem Schaltgabelgrundkörper ein Presssitz besteht. Die Erfindung ermöglicht es somit, vor dem dauerhaften und belastbaren Verbinden beispielsweise durch Laserschweißen, dass das Einpressmaß E eingestellt werden kann und somit die vertikale Genauigkeit von der Schaltgliedachse zur Mittelachse der Schaltgabel verbessert werden kann. Es können somit beim Einpressen Ungenauigkeiten der Einzelteile, die fertigungsbedingt stets entstehen, und die Biegefehler korrigiert werden.

Beim gerichteten Einpressen wird in der Regel eine Position der Bauteile angestrebt, dass sie Mittelachse der Schaltgabel senkrecht zur Schaltgliedachse steht. Der Presssitz zwischen Schaltgabelgrundkörper und Führung dient nicht der dauerhaften Kraftübertragung, sondern nur als Fixierung bis zum dauerhaften Verbinden beispielsweise durch einen Stoffschluss. Der Pressverband stellt das Maß zwischen der Schaltgliedachse und der Schaltgabelgrundkörperebene und damit der Schiebemuffenachse ein. Der nicht-kraftübertragende Pressverband kann durch ein relativ schonendes Schweißverfahren wie Plasmatronschweißen, bei dem möglichst wenig Wärme eingebracht wird, fixiert werden. Idealerweise wird die entstandene Fügekant kreisrund verschweißt. Durch den geringen Verzug ist es entbehrlich, für den Schaltgabelgrundkörper verschiedenartige Gleitschuhe vorzuhalten, welche diesen korrigieren oder anderweitige Maßnahmen zur Verzugskorrektur vorzusehen. Der Verzug wird weiterhin dadurch minimiert, dass im Schweißbereich keine Biegekanten vorhanden sind.

Die Führung weist zumindest einen Boden mit einer dritten Ausnehmung auf, über welche der Presssitz mit dem Schaltgabelgrundkörper erfolgt. Die dritte Ausnehmung ist radial zur Schaltgliedachse orientiert. In einer Weiterbildung der Erfindung weisen zwei parallele Wände von dem Boden rechtwinklig in Richtung der Schaltgliedachse, wobei sie eine erste und zweite Ausnehmung zur Aufnahme des Schaltglieds aufweisen. In der ersten und zweiten Ausnehmung können Lagerungsbuchsen angeordnet sein, über welche das Schaltglied gelagert ist.

Nach einer weiteren Ausbildung der Erfindung weist die Führung eine vierte Ausnehmung in einer Rückwand, welche senkrecht zum Boden und zu den ersten beiden Wänden ausgebildet ist, auf. Die vierte Ausnehmung nimmt ein Rastierelement auf, welches mit einem Rastgebirge auf dem Schaltglied zusammenwirkt. Durch diese Anordnung ist die Schaltanordnung sehr kompakt und benötigt nur wenig Bauraum.

Weiterhin ist es möglich, der Rückwand gegenüberliegend ein Schaltmaul anzuordnen, über welchen die Schaltanordnung verstellbar ist, ohne dass die Kompaktheit der Führung aufgegeben werden braucht. Prinzipiell kann ein Schaltmaul, ein Schaltarm oder ein Schaltfinger aber beliebig an der Führung befestigt sein.

Die Ausnehmungen der Führung können etwa als Bohrungen oder als Durchstellungen ausgebildet sein. Vorteilhaft bei den Durchstellungen ist, dass eine Fügekante entsteht, mittels derer ein sicherer Sitz der Bauteile ermöglicht wird und die, soweit erforderlich, geschweißt werden kann.

Der Schaltgabelgrundkörper weist im Mittenbereich, der sich zwischen den Gabelenden angeordnet ist, eine als Durchstellung ausgebildete Gabelkörperausnehmung auf. In einer Weiterbildung der Erfindung ist der Mittenbereich ist in seiner Größe und Form der Form der Führung angepasst, so dass sich ein großer Abstützbereich ergibt.

Die erfindungsgemäße Schaltanordnung ist leicht an verschiedene Schaltglieder anpassbar. Sowohl die Form der Ausnehmungen als auch deren minimaler und maximaler Durchmesser können der maximal zu übertragenden Kraft leicht durch einfaches Skalieren der Führung angepasst werden. Die Schaltanordnung realisiert durch die wenigen Einzelteile auch in der Summe eine geringe Gesamtungenauigkeit der gewünschten Winkel der Bauteile zueinander. Durch den geringen Verzug eignet sich eine derartige Schaltanordnung besonders für Dünnblechschaltgabeln.

### Kurze Beschreibung der Zeichnungen

Die Erfindung wird nachstehend anhand eines Ausführungsbeispiels näher erläutert. Die dazugehörigen Zeichnungen zeigen:
- Figur 1: eine perspektivische Ansicht einer erfindungsgemäßen Schaltanordnung ohne das Schaltglied,
- Figur 2: einen Querschnitt der Schaltanordnung nach Figur 1,
- Figur 3: einen Längsschnitt der Schaltanordnung entlang III-III nach Figur 2,
- Figur 4: eine Aufsicht auf die erfindungsgemäße Schaltanordnung nach Figur 1,
- Figur 5: eine erfindungsgemäße Führung,
- Figur 6: eine mit der erfindungsgemäßen Führung nach Figur 5 einpressbaren Schaltgabelgrundkörper.

### Ausführliche Beschreibung der Zeichnungen

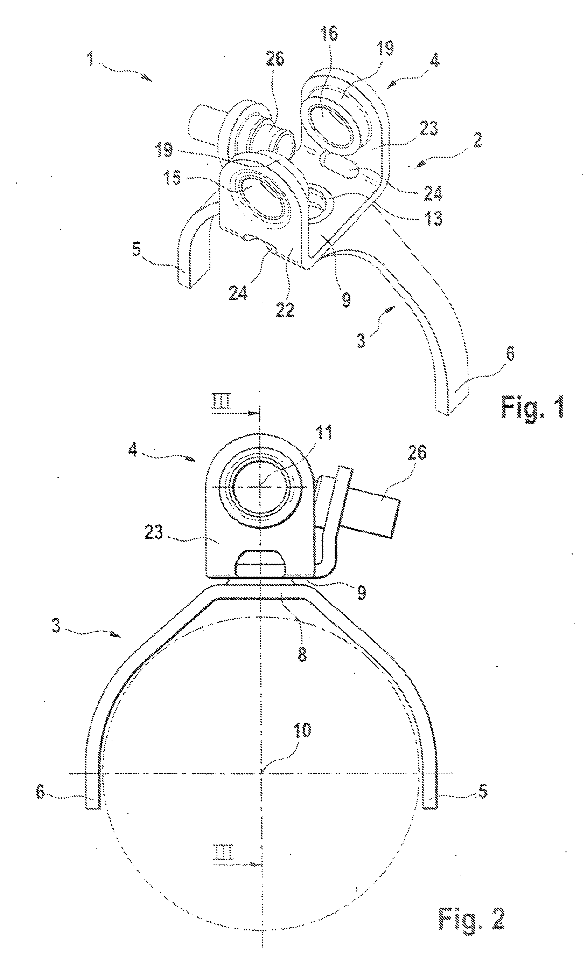

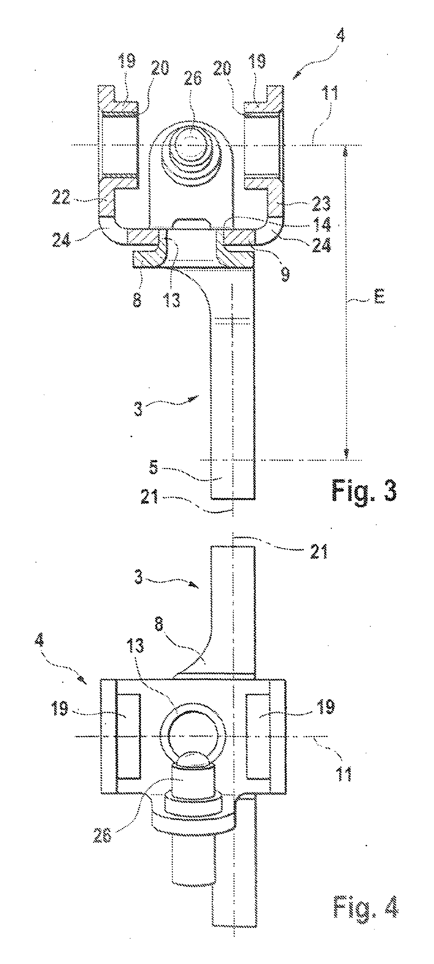

Das Ausführungsbeispiel einer Schaltanordnung 1 gemäß der Figuren 1 bis 4 weist eine Schaltgabel 2 mit einem Schaltgabelgrundkörper 3 und einer Führung 4 sowie ein nicht dargestelltes Schaltglied, das entlang einer Schaltgliedachse 11 orientiert ist, auf. Der Schaltgabelgrundkörper 3 ist ein gabelförmig ausgebildetes Blechformteil mit Gabelenden 5 und 6, die eine Schiebemuffe (nicht bzw. als Umriß dargestellt), deren Rotationsachse mit 10 bezeichnet ist, umgreifen.

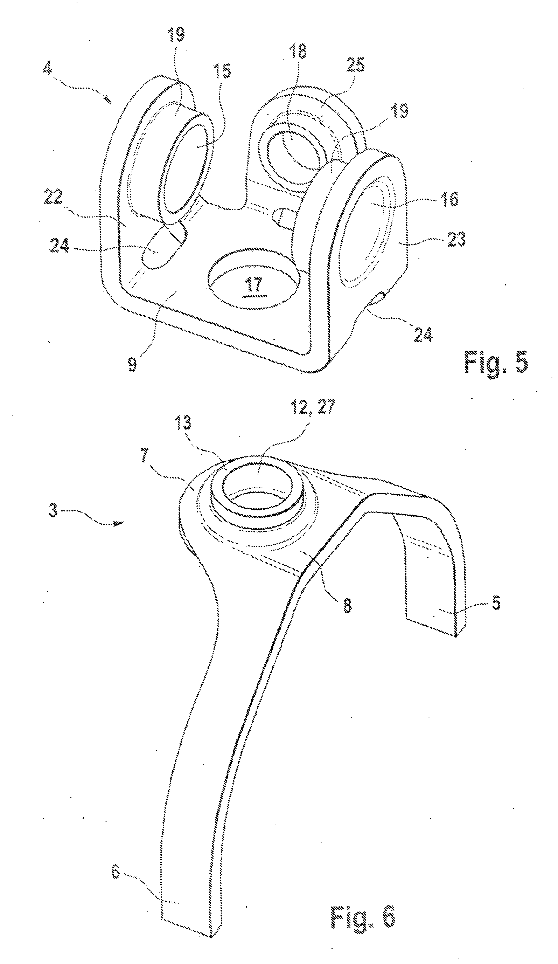

Der Schaltgabelgrundkörper 3 (Figur 6) ist so verformt, dass er auf der der Schiebemuffe abgewandten Seite 7 zwischen den Gabelenden 5 und 6 einen Mittenbereich 8 aufweist, der in seiner Form dem Boden 9 der Führung 4 angepasst ist. Im Mittenbereich 8 weist er eine Gabelkörperausnehmung 12 auf, die als Durchstellung 27 ausgebildet ist, so dass ein umlaufender Rand 13 den Schaltgabelgrundkörper 3 auf der schiebemuffenabgewandten Seite 7 beschließt.

Der Schaltgabelgrundkörper 3 ist aus Blech hergestellt und mit der Führung 4 zunächst durch einen gerichteten Pressitz verbunden und dann durch eine Lasernaht 14 verschweißt. Dabei greift der Rand 13 in eine dritte Ausnehmung 17, welche gestanzt ist, im Boden 9 der Führung 4 ein. Die dritte Ausnehmung 17 ist in Form und Größe dem Rand 13 angepasst, so dass bei der Montage ein Presssitz möglich ist.

Die Führung 4 ist ebenfalls aus Blech oder Flachmaterial und weist einen wannenförmigen Aufbau auf, wobei eine erste und zweite Ausnehmung 15, 16, welche rotationssymmetrisch zur Schaltgliedachse 11 sind, in zum Boden 9 rechtwinkligen parallelen Wänden 22, 23 angeordnet sind. Sie weisen Auskragungen 19 auf, über welche das Schaltglied sicher geführt werden kann. Zur Verbesserung der Führungseigenschaften sind zwischen den Auskragungen 19 und dem Schaltglied Lager 20 angeordnet. Die erste und zweite Ausnehmung 15, 16 stehen senkrecht zur Ebene 21 des Schaltgabelgrundkörpers 3. Zur Masseoptimierung sind zwischen Boden 9 und Wänden 22, 23 Aussparungen 24 angeordnet. Orthogonal zu den parallelen Wänden 22, 23 ist eine weitere Wand 25 mit einer vierten Ausnehmung 18 angeordnet, in welcher ein Rastierelement 26 eingepresst ist. Das Rastierelement 26 wirkt mit einem Rastgebirge auf dem Schaltglied zusammen.

### Bezugszahlenliste

- 1: Schaltanordnung
- 2: Schaltgabel
- 3: Schaltgabelgrundkörper
- 4: Führung
- 5: Gabelende
- 6: Gabelende
- 7: abgewandte Seite
- 8: Mittenbereich
- 9: Boden
- 10: Rotationsachse
- 11: Schaltgliedachse
- 12: Gabelkörperausnehmung
- 13: Rand
- 14: Lasernaht
- 15: erste Ausnehmung
- 16: zweite Ausnehmung
- 17: dritte Ausnehmung
- 18: vierte Ausnehmung
- 19: Auskragungen
- 20: Lager
- 21: Ebene
- 22: parallele Wand
- 23: parallele Wand
- 24: Aussparungen
- 25: weitere Wand
- 26: Rastierelement
- 27: Durchstellung

- E: Einpressmaß

## Patentansprüche

1. Schaltanordnung (1) mit einem Schaltglied eines Zahnräderwechselgetriebes und einer in eine Schiebemuffe eingreifenden Schaltgabel (2), die zumindest aus einer auf dem Schaltglied angeordneten Führung (4) mit mindestens einer Ausnehmung (16), deren Ausformung komplementär zum Schaltglied ist, und einem Schaltgabelgrundkörper (3) besteht, wobei der Schaltgabelgrundkörper (3) gegenüberliegende Gabelenden (5, 6) aufweist, welche die Schiebemuffe umgreifen, **dadurch gekennzeichnet, dass** die Führung (4) zumindest drei Ausnehmungen (15, 16, 17) aufweist, von denen die erste und zweite Ausnehmung (15, 16) als Durchgangsausnehmungen das Schaltglied aufnehmen, und wobei die dritte Ausnehmung (17) den Schaltgabelgrundkörper (3) aufnimmt.

2. Schaltanordnung nach Anspruch 1, **dadurch gekennzeichnet, dass** die Führung (4) aus Blech ausgebildet ist.

3. Schaltanordnung nach Anspruch 1, **dadurch gekennzeichnet, dass** die Führung (4) und der Schaltgabelgrundkörper (3) miteinander verpresst sind

4. Schaltanordnung nach Anspruch 1, **dadurch gekennzeichnet, dass** die dritte Ausnehmung (17) radial in Richtung der Schaltgliedachse (11) weist.

5. Schaltanordnung nach Anspruch 1, **dadurch gekennzeichnet, dass** die Ausnehmungen (15, 16, 17) als Durchzüge ausgebildet sind.

6. Schaltanordnung nach Anspruch 1, **dadurch gekennzeichnet, dass** der Schaltgabelgrundkörper (3) stoffschlüssig mit dem Boden (9) der Führung (4) verbunden ist.

7. Schaltanordnung nach Anspruch 1, **dadurch gekennzeichnet, dass** die Führung (4) eine vierte Ausnehmung (18) zur Aufnahme eines Rastierelements (26) aufweist.

8. Schaltanordnung nach Anspruch 7, **dadurch gekennzeichnet, dass** die vierte Ausnehmung (18) im Wesentlichen senkrecht zur ersten, zweiten und dritten Ausnehmung (15, 16, 17) ausgebildet ist.

9. Verfahren zur Herstellung einer Schaltgabel (2) für eine Schaltanordnung (1), **dadurch gekennzeichnet, dass** in einem ersten Schritt ein Schaltgabelgrundkörper (3) in eine Führung (4) derart eingepresst wird, dass beim Einpressen die Rechtwinkligkeit zwischen Führung (4) und Schaltgabelgrundkörper (3) eingestellt wird und dass in einem zweiten Verfahrensschritt eine Fixierung von Führung (4) und Schaltgabelgrundkörper (3) durch einen Schweißvorgang erfolgt.

## Claims

1. Gearshift arrangement (1) comprising a gearshift member of a variable speed gear transmission and a gearshift fork (2) engaging into a sliding sleeve, said gearshift fork (2) comprising at least one guide (4) arranged on the gearshift member, said guide comprising at least one recess (16) of a shape complementary to the gearshift member, and said gearshift fork (2) further comprising a gearshift fork base body (3) possessing two fork ends (5, 6) situated opposite each other and engaging around the sliding sleeve, **characterised in that** the guide (4) comprises at least three recesses (15, 16, 17) of which the first and the second recess (15, 16) are made as through-recesses and receive the gearshift member, while the third recess (17) receives the gearshift fork base body (3).

2. Gearshift arrangement according to claim 1, **characterised in that** the guide (4) is made out of sheet metal.

3. Gearshift arrangement according to claim 1, **characterised in that** the guide (4) and the gearshift fork base body (3) are connected to each other by pressing.

4. Gearshift arrangement according to claim 1, **characterised in that** the third recess (17) points radially in direction of the axis (11) of the gearshift member.

5. Gearshift arrangement according to claim 1, **characterised in that** the recesses (15, 16, 19) are configured as passages.

6. Gearshift arrangement according to claim 1, **characterised in that** the gearshift fork base body (3) is connected to the bottom (9) of the guide (4) by being rendered unitary therewith.

7. Gearshift arrangement according to claim 1, **characterised in that** the guide (4) comprises a fourth recess (18) for receiving a detent element (26).

8. Gearshift arrangement according to claim 7, **characterised in that** the fourth recess (18) is substantially perpendicular to the first, second and third recess (15, 16, 17).

9. Method of making a gearshift fork (2) for a gearshift arrangement (1), **characterised in that,** in a first step, a gearshift fork base body (3) is pressed in such a way into a guide (4) that perpendicularity is established between the guide (4) and the gearshift fork base body (3) during pressing-in, and that, in a second step of the method, fixing of the guide (4) and the gearshift fork base body (3) is effected by a welding operation.

## Revendications

1. Agencement (1) de changement de vitesse comprenant un membre de changement de vitesse d'une transmission par engrenages et une fourchette (2) de changement de vitesse s'engageant dans un manchon coulissant, cette fourchette (2) de changement de vitesse comprenant, au moins, un guide (4) disposé sur le membre de changement de vitesse, ledit guide (4) comprenant, au moins, un évidement (16) d'une forme complémentaire au membre de changement de vitesse, ladite fourchette (2) de changement de vitesse comprenant, en plus, un corps de base (3) de fourchette de changement de vitesse qui possède deux extrémités (5, 6) de fourchette opposées lesquelles s'engagent autour du manchon coulissant, **caractérisé en ce que** le guide (4) comprend, au moins, trois évidements (15, 16, 17) dont le premier et le second évidement (15, 16), configurés en forme d'évidements traversants, reçoivent le membre de changement de vitesse, et le troisième évidement (17) reçoit le corps de base (3) de fourchette de changement de vitesse.

2. Agencement de changement de vitesse selon la revendication 1, **caractérisé en ce que** le guide (4) est configuré à partir d'une tôle métallique.

3. Agencement de changement de vitesse selon la revendication 1, **caractérisé en ce que** le guide (4) et le corps de base (3) de fourchette de changement de vitesse sont reliés, l'un à l'autre, par pressage.

4. Agencement de changement de vitesse selon la revendication 1, **caractérisé en ce que** le troisième évidement (17) est orienté radialement en direction de l'axe (11) du membre de changement de vitesse.

5. Agencement de changement de vitesse selon la revendication 1, **caractérisé en ce que** les évidements (15, 16, 17) sont configurés sous la forme de passages.

6. Agencement de changement de vitesse selon la revendication 1, **caractérisé en ce que** le corps de base (3) de fourchette de changement de vitesse est relié au fond (9) du guide (4) par jonction de matières.

7. Agencement de changement de vitesse selon la revendication 1, **caractérisé en ce que** le guide (4) comprend un quatrième évidement (18) pour recevoir un élément d'arrêt (26).

8. Agencement de changement de vitesse selon la revendication 7, **caractérisé en ce que** le quatrième évidement (18) est sensiblement perpendiculaire aux premier, second et troisième évidements (15, 16, 17).

9. Méthode de fabriquer une fourchette (2) de changement de vitesse pour un agencement (1) de changement de vitesse, **caractérisé en ce que,** dans un premier pas, un corps de base (3) de fourchette de changement de vitesse est pressé de telle façon dans un guide (4) que, lors de pressage, la perpendicularité est établie entre le guide (4) et le corps de base (3) de fourchette de changement de vitesse, et que, dans un deuxième pas de la méthode, le guide (4) et le corps de base (3) de fourchette de changement de vitesse sont fixés, l'un à l'autre, par un procédé de soudage.
